# EUROPÄISCHE PATENTSCHRIFT

(11) **EP 3 691 961 B1**
(45) Veröffentlichungstag und Bekanntmachung des Hinweises auf die Patenterteilung: **05.06.2024**
(21) Anmeldenummer: 18779274.2
(22) Anmeldetag: 18.09.2018
(51) Int. Cl.: B62J 35/00, B60K 15/067, B62J 37/00

(54) **TANKANORDNUNG AN EINEM RAHMEN EINES KRAFTRADS, RAHMENELEMENT FÜR EIN KRAFTRAD SOWIE MONTAGEVERFAHREN**
TANK ASSEMBLY ON A FRAME OF A MOTORCYCLE, FRAME ELEMENT FOR A MOTORCYCLE, AND MOUNTING METHOD
ENSEMBLE FORMANT RÉSERVOIR SUR LE CADRE D'UNE MOTOCYCLETTE, ELEMENT DE CADRE POUR MOTOCYCLETTE ET PROCÉDÉ D'ASSEMBLAGE

(30) Priorität: 05.10.2017 DE 102017217662
(43) Veröffentlichungstag der Anmeldung: 12.08.2020
(73) Patentinhaber: Bayerische Motoren Werke Aktiengesellschaft, 80809 München (DE)
(72) Erfinder: ERHARD, Daniel, 82256 Fürstenfeldbruck (DE)
(86) Internationale Anmeldenummer: PCT/EP2018/075170
(87) Internationale Veröffentlichungsnummer: WO 2019/068456

(56) Entgegenhaltungen:
- EP-A2- 0 849 149
- JP-A- 2005 047 403
- JP-U- S6 228 692
- US-A1- 2003 075 659
- US-A1- 2014 262 580

## Beschreibung

Die Erfindung betrifft eine Tankanordnung an einem Rahmen eines Kraftrads, ein Rahmenelement für ein Kraftrad sowie ein Montageverfahren für einen Tank an einem Rahmen eines Kraftrads gemäß den Oberbegriffen der unabhängigen Patentansprüche.

Bei Tankanbindungen für Krafträder ist es bereits allgemein bekannt, den Tank über jeweilige an einer ersten Seite des Tanks angeordnete Stützelemente an jeweils zugeordneten, auf beiden Außenseiten eines Rahmenelements des Kraftrads angeordneten Lagerelementen zu stützen. Das bedeutet, dass die Lagerelemente entlang einer Fahrzeugquerrichtung auf unterschiedlichen Seiten des Rahmenelements angeordnet sind. Dabei sind die Lagerelemente beispielsweise als Sterngummielemente ausgebildet und werden bei einer Montage des Tanks an dem Rahmenelement zumindest bereichsweise von den jeweiligen Stützelementen umschlossen und gegebenenfalls eingepresst. Dies dient einer Fixierung des Tanks an dem Rahmenelement in Fahrzeughochrichtung sowie in Fahrzeugquerrichtung des Kraftrads. Um den Tank gegen eine Bewegung in Fahrzeuglängsrichtung des Kraftrads abzusichern, ist eine Befestigungseinrichtung vorgesehen, welche an einer der ersten Seite gegenüber liegenden Seite des Tanks angeordnet ist und mittels welcher der Tank an dem Rahmen des Kraftrads befestigbar ist.

Aus der US 2012/0200096 A1 ist eine Halterung bekannt, mittels welcher ein jeweiliger Halter eines Tanks eines Kraftrads mit zwei korrespondierenden Bolzen eines Rahmenelements des Kraftrads in Eingriff bringbar ist. Die Halterungseinrichtung umfasst hierfür ein planares Grundelement, welches zwei sich senkrecht zueinander erstreckende Öffnungen aufweist. In diesen Öffnungen sind die jeweiligen Halterungen des Tanks aufnehmbar. Darüber hinaus weist das Grundelement zwei schlüssellochförmige Öffnungen für die Bolzen auf.

Darüber hinaus sind aus der US 2014/262580 A1, der JP 2005 047403 A und der JP S62 28692 U jeweils Tankanordnungen an einem Rahmen eines Kraftrads bekannt, bei welchen ein Tank über jeweilige an dem Tank angeordnete Stützelemente an jeweils zugeordneten, auf beiden Außenseiten eines Rahmenelements angeordneten Lagerelementen abgestützt ist. Außerdem offenbart die EP 0 849 149 A2 eine Tankanordnung, ein Rahmenelement und ein Montageverfahren gemäß den Oberbegriffe der Ansprüche 1, 5 und 7.

Aufgabe der vorliegenden Erfindung ist es, eine Tankanordnung an einem Rahmen eines Kraftrads, ein Rahmenelement für ein Kraftrad sowie ein Montageverfahren zu schaffen, mittels welchen ein Tank eines Kraftrads besonders einfach an einem Rahmen des Kraftrads befestigbar ist und in einer Einbauposition besonders gut vor seitlicher Krafteinwirkung geschützt ist.

Diese Aufgabe wird erfindungsgemäß durch eine Tankanordnung an einem Rahmen eines Kraftrads, durch ein Rahmenelement für ein Kraftrad sowie durch ein Montageverfahren mit den Merkmalen der unabhängigen Patentansprüche gelöst.

Vorteilhafte Ausführungen der Erfindung sind Gegenstand der abhängigen Patentansprüche und der Beschreibung.

Zur Schaffung einer Tankanordnung an einem Rahmen eines Kraftrads der eingangs genannten Art, welches besonders einfach montierbar ist und besonders gut vor einer seitlichen Krafteinwirkung geschützt ist, ist erfindungsgemäß vorgesehen, dass im Bereich des jeweiligen Lagerelements ein zugehöriges Sicherungselement an der entsprechenden Außenseite des Rahmenelements festgelegt ist, indem das jeweilige Sicherungselement mittels zweier Schraubverbindungen mit dem Rahmenelement verbunden ist, wobei das jeweilige Sicherungselement das zugeordnete Stützelement mit einem Abstand umgibt. Das bedeutet, dass in einem Nahbereich des jeweiligen Lagerelements neben dem jeweiligen Lagerelement das zugehörige Sicherungselement an der Außenseite des Rahmenelements festgelegt beziehungsweise befestigt ist. Somit beträgt ein Abstand zwischen dem Sicherungselement und dem jeweiligen Lagerelement beispielsweise höchstens 150 Millimeter, insbesondere höchstens 100 Millimeter, insbesondere höchstens 50 Millimeter, sodass eine Anbindung des jeweiligen mit dem Lagerelement verbundenen Stützelements in einem Einbauzustand des Tanks mittels des Sicherungselements besonders gut gegen die seitliche Krafteinwirkung geschützt ist. Hierfür umgibt das Sicherungselement das zugeordnete Stützelement mit einem Abstand, um zu gewährleisten, dass das mit dem Rahmenelement fest verbundene Sicherungselement Schwingungen und/oder Vibrationen des Rahmenelements nicht beziehungsweise lediglich möglichst wenig auf den Tank über dessen jeweilige Stützelemente überträgt. Durch die Verbindung der jeweiligen Lagerelemente mit den jeweiligen Stützelementen ist der Tank gegen eine Relativbewegung in Fahrzeughochrichtung relativ zu dem Rahmenelement abgesichert. Das Sicherungselement kann beispielsweise in Form einer Lasche ausgebildet sein und ein Material aufweisen, welches einem Material des Rahmenelements entspricht. Das jeweilige Sicherungselement, welches im Bereich des jeweiligen Lagerelements angeordnet ist, sichert den Tank zumindest im Wesentlichen gegen eine Relativbewegung des Tanks in Fahrzeugquerrichtung relativ zum Rahmenelement ab. Durch diese Absicherung kann verhindert werden, dass bei einer in Fahrzeugquerrichtung auf den Tank wirkende Kraft ein Lösen wenigstens eines Stützelementes von dem jeweils zugeordneten Lagerelement auslöst. Dieses sogenannte Ausknöpfen des Stützelements von dem Lagerelement kann folglich durch das zugehörige Sicherungselement zumindest im Wesentlichen unterbunden werden.

In einer vorteilhaften Ausgestaltung der Erfindung ist vorgesehen, dass der Tank aus einem Kunststoff und das Sicherungselement aus einem Metall gebildet sind. Der aus einem Kunststoff gebildete Tank ist im Vergleich zu einem Metalltank besonders leicht und besonders kostengünstig. Da der Kunststofftank jedoch aufgrund eines inneren Überdrucks oder aufgrund einer seitlichen Krafteinwirkung insbesondere in Fahrzeugquerrichtung verformt werden kann, wodurch die an dem Tank angeordneten Stützelemente von den jeweiligen zugeordneten Lagerelementen gelöst werden können, ist das jeweilige zugehörige Sicherungselement zum Verhindern des Ausknöpfens notwendig. Durch die Ausbildung des Sicherungselements aus dem Metall weist dieses eine besonders hohe Stabilität auf. Darüber hinaus kann eine Korrosionsgefahr besonders gering gehalten werden, sofern das jeweilige Sicherungselement das gleiche Metall aufweist wie das Rahmenelement des Rahmens des Kraftrads.

Es hat sich darüber hinaus als vorteilhaft gezeigt, wenn die jeweiligen Stützelemente als Teil des Tanks ausgebildet sind und einen Kunststoff umfassen. Insbesondere umfassen die jeweiligen Stützelemente den gleichen Kunststoff wie der Tank. Durch eine Ausbildung der jeweiligen Stützelemente als Teil des Tanks sind diese besonders stabil und besonders sicher mit dem Tank verbunden, sodass eine Trennung der jeweiligen Stützelemente von dem Tank besonders unwahrscheinlich ist.

In einer weiteren vorteilhaften Ausgestaltung der Erfindung ist vorgesehen, dass die jeweiligen Stützelemente eine dem Rahmenelement zugewandte Seite aufweisen, an welcher die Stützelemente jeweils eine C-förmige Aussparung aufweisen, welche bei einer Anordnung des Tanks an dem Rahmenelement mit den jeweiligen Lagerelementen in Eingriff bringbar sind. Die C-förmige Aussparung erstreckt sich in dem Einbauzustand des Tanks zumindest im Wesentlichen in Fahrzeuglängsrichtung des Kraftrads und beispielsweise lediglich über einen Teil einer Tiefe des jeweiligen Stützelements, sodass eine dem Rahmenelement abgewandte Seite des jeweiligen Stützelements die C-förmige Aussparung nicht aufweist. Beispielsweise ist die C-förmige Aussparung an der dem Rahmenelement zugewandten Seite des Stützelements angeordnet und erstreckt sich über eine halbe Tiefe des Stützelements. In der jeweiligen C-förmigen Aussparung des jeweiligen Stützelements sind in dem Einbauzustand des Tanks die jeweiligen Lagerelemente zumindest bereichsweise in der jeweiligen C-förmigen Aussparung aufgenommen. Insbesondere sind die jeweiligen Lagerelemente in dem Einbauzustand bereichsweise in den jeweiligen C-förmigen Aussparungen eingepresst, sodass die jeweiligen Stützelemente mit den zugeordneten Lagerelementen zumindest bereichsweise formschlüssig verbunden sind und/oder zumindest bereichsweise kraftschlüssig verbundenen sind.

Ein weiterer Aspekt der Erfindung betrifft ein Rahmenelement für ein Kraftrad, mit zwei auf beiden Außenseiten des Rahmenelements angeordneten Lagerelementen, über welche ein Tank des Kraftrads in seinem Einbauzustand mittels jeweils zugeordneter Stützelemente des Tanks abstützbar ist. Zur Ermöglichung einer besonders einfachen Montage des Tanks an dem Rahmenelement sowie einer Sicherung des sich in seinem Einbauzustand befindenden Tanks gegen eine Krafteinwirkung in Fahrzeugquerrichtung ist erfindungsgemäß im Bereich des jeweiligen Lagerelements ein zugehöriges Sicherungselement an der entsprechenden Außenseite des Rahmenelements festgelegt, indem das jeweilige Sicherungselement mittels zweier Schraubverbindungen mit dem Rahmenelement verbunden ist, wobei das jeweilige Sicherungselement das zugeordnete Stützelement mit einem Abstand umgibt. Das bedeutet, dass das Rahmenelement an seinen beiden Außenseiten jeweils ein Lagerelement und ein zugehöriges Sicherungselement aufweist. Dabei sind die jeweiligen Lagerelemente an in Fahrzeugquerrichtung gegenüberliegenden Außenseiten des Rahmenelements angeordnet. Die zugehörigen Sicherungselemente umgeben die zugeordneten Stützelemente des Tanks in dessen Einbauzustand mit einem Abstand um eine Schwingungsübertragung und/oder eine Vibrationsübertragung von dem Rahmenelement auf den Tank zumindest im Wesentlichen zu unterbinden. Mittels der Sicherungselemente wird der Tank gegen eine Relativbewegung relativ zum Rahmenelement entlang der Fahrzeugquerrichtung abgesichert, wohingegen der Tank mittels der mit den Lagerelementen in Eingriff gebrachten Stützelemente vor einer Relativbewegung des Tanks entlang einer Fahrzeughochrichtung relativ zum Rahmenelement geschützt ist. Dies ermöglicht eine besonders sichere Anbringung des Tanks an dem Rahmenelement.

In einer vorteilhaften Ausgestaltung der Erfindung ist vorgesehen, dass das Sicherungselement in einem Nahbereich neben dem Lagerelement, welches ein Sterngummielement umfasst, an der Außenseite des Rahmenelements angeordnet ist. Das bedeutet, dass das Sicherungselement beispielsweise entlang einer Fahrzeuglängsrichtung vor oder hinter dem zugehörigen Lagerelement angeordnet ist. Dabei ist unter dem Nahbereich zu verstehen, dass ein Abstand zwischen dem Sicherungselement und dem Lagerelement höchstens 150 Millimeter, insbesondere höchstens 100 Millimeter, insbesondere höchstens 50 Millimeter beträgt. Dies ermöglicht eine besonders einfache Montage des Tanks an dem Rahmenelement, indem die Stützelemente des Tanks zeitversetzt mit den Lagerelementen und den Sicherungselementen in Eingriff gebracht werden.

Ein weiterer Aspekt der Erfindung betrifft ein Montageverfahren für einen Tank an einem Rahmen eines Kraftrads, bei welchem jeweilige Stützelemente des Tanks an jeweils zugeordneten, auf beiden Außenseiten eines Rahmenelements angeordneten Lagerelementen abgestützt werden. Für eine besonders einfache Montage des Tanks an dem Rahmen sowie eine Sicherung des Tanks gegen eine Krafteinwirkung in Fahrzeugquerrichtung ist es erfindungsgemäß vorgesehen, dass die jeweiligen Stützelemente durch ein zugehöriges, in einem Bereich des jeweiligen Lagerelements angeordnetes Sicherungselement, welches an der entsprechenden Außenseite des Rahmenelements festgelegt ist, indem das jeweilige Sicherungselement mittels zweier Schraubverbindungen mit dem Rahmenelement verbunden ist, hindurchgeführt werden, sodass das jeweilige Sicherungselement das jeweilige Stützelement mit einem Abstand umgibt. Das bedeutet, dass die jeweiligen Stützelemente des Tanks durch eine zumindest im Wesentlichen horizontale Bewegung des Tanks entlang einer Fahrzeuglängsrichtung des Kraftrads relativ zum Rahmenelement bewegt werden und hierdurch mit jeweils einem Lagerelement des Rahmenelements in Eingriff gebracht werden. Während des Montagevorgangs wird das jeweilige Stützelement zwischen eine Außenseite des Rahmenelements und das Sicherungselement geführt, welches beispielsweise laschenförmig ist. In dem Einbauzustand des Tanks werden somit die jeweiligen Stützelemente sowohl mit einem jeweiligen Lagerelement verbunden, als auch von einem jeweiligen Sicherungselement mit einem Abstand umgeben. Hierdurch ist der Tank besonders vorteilhaft sowohl in Fahrzeughochrichtung als auch in Fahrzeugquerrichtung vor einer Relativbewegung relativ zu dem Rahmenelement abgesichert.

In einer vorteilhaften Ausgestaltung der Erfindung ist vorgesehen, dass bei einer Anordnung des Tanks an dem Rahmenelement eine C-förmige Aussparung des jeweiligen Stützelements durch ein Auflegen auf das zugeordnete Lagerelement mit einem Sterngummielement des Lagerelements in Eingriff gebracht wird. Hierdurch kann vorteilhafterweise eine besonders feste kraftschlüssige Verbindung zwischen dem jeweiligen Stützelement und dem zugeordneten Lagerelement hergestellt werden.

Vorteile und vorteilhafte Ausgestaltungen der erfindungsgemäßen Tankanordnung, des erfindungsgemäßen Rahmenelements, des erfindungsgemäßen Montageverfahrens sowie des erfindungsgemäßen Kraftrads sind jeweils als Vorteile und vorteilhafte Ausgestaltungen der jeweiligen anderen Aspekte der Erfindung anzusehen.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die Zeichnungen näher erläutert. Es zeigen:

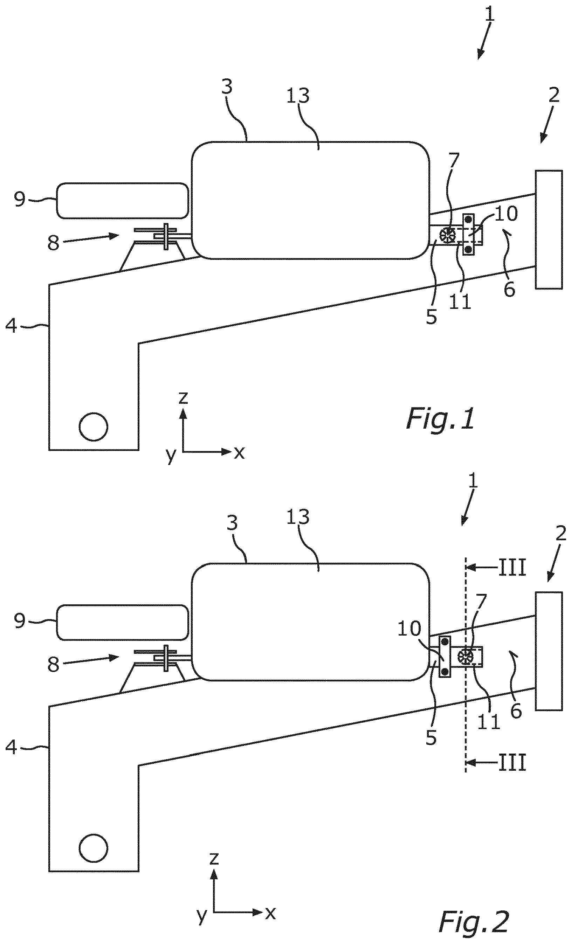

- Fig. 1: eine schematische Seitenansicht einer Tankanordnung mit einem an einem Rahmenelement eines Rahmens eines Kraftrads befestigten Tank, welcher mittels jeweiliger Stützelemente über zugeordnete Lagerelemente mit dem Rahmenelement verbunden ist, wobei die jeweiligen Stützelemente mit zugehörigen Sicherungselementen des Rahmenelements gegen eine Relativbewegung des Tanks relativ zum Rahmenelement in Fahrzeugquerrichtung gesichert sind, wobei das jeweilige Sicherungselement auf einer einem mit Kraftstoff befüllbaren Hohlraum des Tanks abgewandten Seite des Lagerelements am Rahmenelement angeordnet ist;
- Fig. 2: eine schematische Seitenansicht der Tankanordnung, wobei das jeweilige Sicherungselement zwischen dem zugehörigen Lagerelement und dem Hohlraum des Tanks, welcher dazu eingerichtet ist, den Kraftstoff auszunehmen, angeordnet ist; und
- Fig. 3: eine schematische Schnittansicht der Tankanordnung entlang der Linie III-III.

Sowohl Fig. 1 als auch Fig. 2 zeigen jeweils eine schematische Seitenansicht einer Tankanordnung 1 an einem Rahmen 2 eines Kraftrads. Das Kraftrad, bei welchem es sich insbesondere um ein Motorrad handelt, ist vorliegend über eine Verbrennungskraftmaschine mittels eines Kraftstoffs antreibbar. Der Kraftstoff für die Verbrennungskraftmaschine ist in einem Hohlraum eines Tanks 3 aufgenommen, welcher in einem Einbauzustand an einem Rahmenelement 4 des Rahmens 2 angeordnet ist. Sowohl der Tank 3, als auch das Rahmenelement 4 sind Bestandteile der Tankanordnung 1.

Der Tank 3 weist vorliegend zwei Stützelemente 5 auf, welche jeweils an einer in Fahrzeugquerrichtung y des Kraftrads gegenüberliegenden Außenseite 6 des Rahmenelements 4 in dem Einbauzustand des Tanks 3 angeordnet sind. Sowohl die jeweiligen Stützelemente 5 als auch der Tank 3, welcher die Stützelemente 5 umfasst, weisen vorliegend einen Kunststoff auf. Die jeweiligen Stützelemente 5 sind an jeweils zugeordneten, auf beiden Außenseiten 6 des Rahmenelements 4 angeordneten Lagerelementen 7 abgestützt. Bei den Lagerelementen 7 handelt es sich vorliegend um sogenannte Sterngummielemente, welche in dem Einbauzustand des Tanks 3 zwischen den jeweiligen Stützelementen 5 und der Außenseite 6 des Rahmenelements 4 angeordnet sind. Aufgrund einer Abstützung der jeweiligen Stützelemente 5 an den zugeordneten Lagerelementen 7 ist der Tank 3 wie in den Fig. 1 und 2 zu sehen ist, zumindest einseitig gegen eine Relativbewegung des Tanks 3 relativ zum Rahmenelement 4 in Fahrzeughochrichtung z abgesichert. Eine andernseitig an dem Tank 3 und an dem Rahmenelement 4 angeordnete Befestigungseinrichtung 8, welche vorliegend unterhalb eines Sitzkissens 9 des Kraftrads angeordnet ist, dient einer andernseitigen Sicherung des Tanks 3 sowohl in Fahrzeughochrichtung z als auch in Fahrzeugquerrichtung y und in Fahrzeuglängsrichtung x. Der Tank 3 umfasst zusätzlich zu den beiden Stützelementen 5 einen Grundkörper 13, welcher den Hohlraum aufweist, in welchem der Kraftstoff zum Antreiben des Kraftrads aufnehmbar ist.

Zur Vermeidung eines seitlichen Ausknöpfens der jeweiligen Stützelemente 5 von den Lagerelementen 7 in Fahrzeugquerrichtung y umfasst die Tankanordnung 1 jeweils ein dem jeweiligen Lagerelement 7 zugehöriges Sicherungselement 10. Das jeweilige Sicherungselement 10 kann aus einem Metall gebildet sein und ist an der entsprechenden Außenseite 6 des Rahmenelements 4 festgelegt. Das jeweilige Sicherungselement 10 ist vorliegend mittels zweier Schraubverbindungen 12 mit dem Rahmenelement 4 verbunden. Im Einbauzustand des Tanks 3 an dem Rahmenelement 4 umgibt das jeweilige Sicherungselement 10 das jeweilige zugeordnete Stützelement 5 mit einem Abstand, um Schwingungsübertragungen und Vibrationsübertragungen von dem Rahmenelement 4 auf den Tank 3 zu unterbinden. Das jeweilige Sicherungselement 10 ist in einem Nahbereich des jeweiligen Lagerelements 7 an dem Rahmenelement 4 angeordnet.

In der in Fig. 1 gezeigten Darstellung ist das Sicherungselement 10 im Einbauzustand des Tanks 3 an einer dem Grundkörper 13 des Tanks 3 abgewandten Seite des Lagerelements 7 angeordnet. In der in Fig. 2 dargestellten alternativen Ausführungsform ist das Sicherungselement 10 in dem Einbauzustand des Tanks 3 zwischen dem jeweiligen Lagerelement 7 und dem Grundkörper 13 angeordnet.

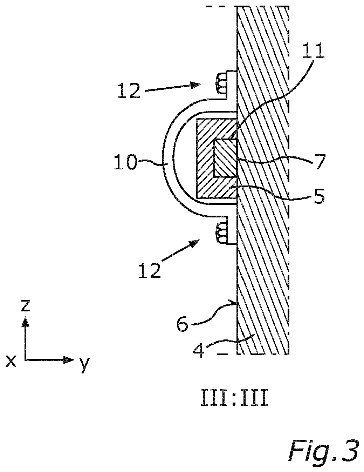

In Fig. 3 ist eine schematische Schnittansicht eines Ausschnitts der Tankanordnung 1 entlang der Linie III-III dargestellt. In der Darstellung kann erkannt werden, dass das jeweilige Stützelement 5 eine Aussparung, vorliegend eine C-förmige Aussparung 11 aufweist, in welcher das jeweilige Lagerelement 7 im Einbauzustand des Tanks 3 aufgenommen ist. Eine C-Form der Aussparung 11 ist in den Fig. 1 und 2 mit gestrichelten Linien angedeutet und ermöglicht ein Abstützen des jeweiligen Stützelements 5 an dem jeweiligen Lagerelement 7, indem die Aussparung 11 in einem Montageverfahren für den Tank 3 an dem Rahmenelement 4 entlang der Fahrzeuglängsrichtung x über das jeweilige Lagerelement 7 geschoben wird. Währenddessen wird das jeweilige Stützelement 5 zwischen das zugeordnete Sicherungselement 10 und die jeweilige Außenseite 6 des Rahmenelements 4 geschoben. Wie in Fig. 3 erkannt werden kann, sichert das Sicherungselement 10 das jeweilige Stützelement 5 gegen eine Relativbewegung des jeweiligen Stützelements 5 relativ zum Rahmenelement 4 entlang der Fahrzeugquerrichtung y ab.

Der im Zusammenhang mit den Fig. 1 bis 3 beschriebenen Tankanordnung 1 liegt die Erkenntnis zugrunde, dass es sich bei aus Kunststoff gefertigten Fahrzeugkraftstofftanks generell unter anderem um sogenannte Blasformtanks handelt, bei welchem die Stützelemente 5 ebenfalls aus dem Kunststoff, aus welchem der Grundkörper 13 gebildet ist, gebildet sind. Die jeweiligen Stützelemente 5 können in einem Spritzgießverfahren kostengünstig hergestellt werden und anschließend während eines Blasformprozesses zur Herstellung des Grundkörpers 13 als Einlegeteile verwendet werden, um mit dem Grundkörper 13, bei welchem es sich um einen Kraftstoffbehälter handelt, verbunden zu werden. Die Anbindung der jeweiligen Stützelemente 5 an den Grundkörper 13 erfolgt demnach bei einer Herstellung des Grundkörpers 13. Die jeweiligen Stützelemente 5 unterliegen besonderen Anforderungen hinsichtlich eines Schwingungs- und Vibrationsverhaltens, da über die Stützelemente 5 auftretende Schwingungen und Vibrationen gedämpft werden sollten. Ferner sollten die Stützelemente 5 Schwingungen und Vibrationen einer Fahrzeugkarosserie, insbesondere des Rahmens 2, von dem Grundkörper 13 entkoppeln, sodass dieser weitestgehend schwingungsfrei an dem Rahmen 2, vorliegend dem Rahmenelement 4, befestigt ist. Zusätzlich sollten die Stützelemente 5 mechanischen Anforderungen an statische sowie dynamische Krafteinwirkungen von außen standhalten.

Bei der in Zusammenhang mit den Fig. 1 bis 3 beschriebenen Tankanordnung 1 liegt der Tank 3 entlang der Fahrzeuglängsrichtung x in Fahrtrichtung vorne jeweils auf einem an der Außenseite 6 angeordneten Sterngummielement auf und ist nicht verschraubt. In Fahrzeuglängsrichtung x hinten ist der Tank 3 unterhalb des Sitzkissens 9 mittels der Befestigungseinrichtung 8 an dem Rahmenelement 4 befestigt. Durch ein Lösen der Befestigungseinrichtung 8 ist der Tank 3 um eine entlang der Fahrzeugquerrichtung y verlaufende, durch die Sterngummielemente 7 gebildete Schwenkachse schwenkbar. Ein Abnehmen des Tanks 3, das bedeutet ein Lösen des Tanks 3 von dem Rahmenelement 4, kann durch ein Lösen der Befestigungseinrichtung 8 erfolgen.

Um eine Beständigkeit der Tankanordnung 1 gegenüber dynamischen und statischen Krafteinwirkungen von außen, insbesondere entlang einer Fahrzeugquerrichtung y zu erhöhen, ist das jeweilige Sicherungselement 10 dem jeweiligen Lagerelement 7 zugeordnet an der Außenseite 6 des Rahmenelements 4 angeordnet. Hierdurch wird eine Montageverstärkung für den Tank 3 an dem Rahmenelement 4 geschaffen. Aufgrund des jeweiligen Sicherungselements 10 kann ein Ausknöpfen des jeweiligen Stützelements 5 von dem zugeordneten Lagerelement 7 zumindest im Wesentlichen unterbunden werden. Hierdurch liegt der Tank 3 weiterhin bei einem Aufprall auf eine Seite des Kraftrads mit seinen jeweiligen Stützelementen 5 an den jeweiligen Lagerelementen 7 auf. Hierfür umfasst das jeweilige Sicherungselement 10 vorliegend einen Stahl. Andere Materialien sind ebenfalls möglich, sofern sie bestimmten Anforderungen standhalten. Eine Anbringung des jeweiligen Sicherungselements 10 kann rahmenfest sein und zudem in seiner Form frei wählbar sein. Um eine Montage des Tanks 3 an dem Rahmenelement 4 zu ermöglichen, kann eine Sicherung mittels des jeweiligen Sicherungselements 10 vor oder nach einem Abstützen der jeweiligen Stützelemente 5 an den jeweiligen Lagerelementen 7 erfolgen. Aufgrund einer rahmenfesten Anbringung des jeweiligen Sicherungselements 10 kann das jeweilige zugeordnete Stützelement 5 besonders vorteilhaft gegen das Ausknöpfen abgesichert werden, ohne dass ein zusätzlicher Montageschritt notwendig ist. Darüber hinaus wird das Ausknöpfen des Tanks 3, insbesondere das Ausknöpfen der jeweiligen Stützelemente 5 von den jeweiligen Lagerelementen 7 bei einem hohen Druck beziehungsweise bei einer hohen Temperatur zumindest im Wesentlichen vermieden.

### Bezugszeichenliste

- 1: Tankanordnung
- 2: Rahmen
- 3: Tank
- 4: Rahmenelement
- 5: Stützelement
- 6: Außenseite
- 7: Lagerelement
- 8: Befestigungseinrichtung
- 9: Sitzkissen
- 10: Sicherungselement
- 11: Aussparung
- 12: Schraubverbindung
- 13: Grundkörper
- x: Fahrzeuglängsrichtung
- y: Fahrzeugquerrichtung
- z: Fahrzeughochrichtung

## Patentansprüche

1. Tankanordnung (1) an einem Rahmen (2) eines Kraftrads, mit einem Tank (3), welcher über jeweilige an dem Tank (3) angeordnete Stützelemente (5) an jeweils zugeordneten, auf beiden Außenseiten (6) eines Rahmenelements (4) angeordneten Lagerelementen (7) abgestützt ist,
wobei
im Bereich des jeweiligen Lagerelements (7) ein zugehöriges Sicherungselement (10) an der entsprechenden Außenseite (6) des Rahmenelements (4) festgelegt ist,
**dadurch gekennzeichnet dass**,
das jeweilige Sicherungselement (10) mittels zweier Schraubverbindungen (12) mit dem Rahmenelement (4) verbunden ist, wobei das jeweilige Sicherungselement (4) das zugeordnete Stützelement (5) mit einem Abstand umgibt.

2. Tankanordnung (1) nach Anspruch 1,
**dadurch gekennzeichnet, dass**
der Tank (3) einen Kunststoff umfasst und das Sicherungselement (10) aus einem Metall gebildet ist.

3. Tankanordnung (1) nach Anspruch 1 oder 2,
die jeweiligen Stützelemente (5) als Teil des Tanks (3) ausgebildet sind und einen Kunststoff umfassen.

4. Tankanordnung (1) nach einem der vorhergehenden Ansprüche,
**dadurch gekennzeichnet, dass**
die jeweiligen Stützelemente (5) eine dem Rahmenelement (4) zugewandte Seite aufweisen, an welcher die Stützelemente (5) jeweils eine C-förmige Aussparung (11) aufweisen, welche bei einer Anordnung des Tanks (3) an dem Rahmenelement (4) mit den jeweiligen Lagerelementen (7) in Eingriff bringbar sind.

5. Rahmenelement (4) für ein Kraftrad, mit zwei auf beiden Außenseiten (6) des Rahmenelements (4) angeordneten Lagerelementen (7), über welche ein Tank (3) des Kraftrads in seinem Einbauzustand mittels jeweils zugeordneter Stützelemente (5) des Tanks (3) abstützbar ist,
wobei
an der entsprechenden Außenseite (6) des Rahmenelements (4) im Bereich des jeweiligen Lagerelements (7) ein zugehöriges Sicherungselement (10) festgelegt ist,
**dadurch gekennzeichnet dass**,
das jeweilige Sicherungselement (10) mittels zweier Schraubverbindungen (12) mit dem Rahmenelement (4) verbunden ist, wobei das jeweilige Sicherungselement (4) das zugeordnete Stützelement (5) mit einem Abstand umgibt.

6. Rahmenelement (4) nach Anspruch 5,
**dadurch gekennzeichnet, dass**
das Sicherungselement (10) in einem Nahbereich neben dem Lagerelement (7), welches ein Sterngummielement umfasst, an der Außenseite (6) des Rahmenelements (4) angeordnet ist.

7. Montageverfahren für einen Tank (3) an einem Rahmen (2) eines Kraftrads, bei welchem jeweilige Stützelemente (5) des Tanks (3) an jeweils zugeordneten, auf beiden Außenseiten (6) eines Rahmenelements (4) angeordnete Lagerelemente (7) abgestützt werden,
wobei
die jeweiligen Stützelemente (5) durch ein zugehöriges, in einem Bereich des jeweiligen Lagerelements (7) angeordnetes Sicherungselement (10), welches an der entsprechenden Außenseite (6) des Rahmenelements (4) festgelegt ist, **dadurch gekennzeichnet dass**, das jeweilige Sicherungselement (10) mittels zweier Schraubverbindungen (12) mit dem Rahmenelement (4) verbunden ist, hindurchgeführt werden, wodurch das jeweilige Sicherungselement (10) das jeweilige Stützelement (5) mit einem Abstand umgibt.

8. Montageverfahren nach Anspruch 7,
**dadurch gekennzeichnet, dass**
bei einer Anordnung des Tanks (3) an dem Rahmenelement (4) eine C-förmige Aussparung (11) des jeweiligen Stützelements (5) durch ein Auflegen auf das zugeordnete Lagerelement (7) mit einem Sterngummielement des Lagerelements (7) in Eingriff gebracht wird.

## Claims

1. Tank arrangement (1) on a frame (2) of a motorcycle, with a tank (3) which is supported via respective supporting elements (5), arranged on the tank (3), on respectively assigned bearing elements (7) arranged on the two outer sides (6) of a frame element (4),
an associated securing element (10) being fixed in the region of the respective bearing element (7) on the corresponding outer side (6) of the frame element (4), **characterized in that**
the respective securing element (10) is connected by means of two screw connections (12) to the frame element (4), the respective securing element (4) surrounding the associated supporting element (5) at a spacing.

2. Tank arrangement (1) according to Claim 1, **characterized in that**
the tank (3) comprises a plastic, and the securing element (10) is formed from a metal.

3. Tank arrangement (1) according to Claim 1 or 2, the respective supporting elements (5) are configured as part of the tank (3) and comprise a plastic.

4. Tank arrangement (1) according to one of the preceding claims,
**characterized in that**
the respective supporting elements (5) have a side which faces the frame element (4) and on which the supporting elements (5) in each case have a C-shaped cut-out (11) which, in the case of an arrangement of the tank (3) on the frame element (4), can be brought into engagement with the respective bearing elements (7).

5. Frame element (4) for a motorcycle, with two bearing elements (7) which are arranged on the two outer sides (6) of the frame element (4) and via which a tank (3) of the motorcycle can be supported in its installed state by means of respectively associated supporting elements (5) of the tank (3),
an associated securing element (10) being fixed on the corresponding outer side (6) of the frame element (4) in the region of the respective bearing element (7), **characterized in that**
the respective securing element (10) is connected by means of two screw connections (12) to the frame element (4), the respective securing element (4) surrounding the associated supporting element (5) at a spacing.

6. Frame element (4) according to Claim 5, **characterized in that**
the securing element (10) is arranged on the outer side (6) of the frame element (4) in an immediate vicinity next to the bearing element (7) which comprises a star-shaped rubber element.

7. Mounting method for a tank (3) on a frame (2) of a motorcycle, in the case of which method respective supporting elements (5) of the tank (3) are supported on respectively associated bearing elements (7) arranged on the two outer sides (6) of a frame element (4),
the respective supporting elements (5) through an associated securing element (10) which is arranged in a region of the respective bearing element (7) and is fixed on the corresponding outer side (6) of the frame element (4),
**characterized in that**
the respective securing element (10) is connected by means of two screw connections (12) to the frame element (4), being guided through, as a result of which the respective securing element (10) surrounds the associated supporting element (5) at a spacing.

8. Mounting method according to Claim 7,
**characterized in that**
in the case of an arrangement of the tank (3) on the frame element (4), a C-shaped cut-out (11) of the respective supporting element (5) is brought into engagement with a star-shaped rubber element of the bearing element (7) by being placed onto the associated bearing element (7).

## Revendications

1. Agencement de réservoir (1) sur un cadre (2) d'une motocyclette, avec un réservoir (3) qui est supporté, par des éléments de support (5) respectifs disposés sur le réservoir (3), sur des éléments de positionnement (7) respectivement associés, disposés sur les deux côtés extérieurs (6) d'un élément de cadre (4),
un élément de fixation (10) correspondant étant fixé dans la zone de l'élément de positionnement (7) respectif sur le côté extérieur (6) correspondant de l'élément de cadre (4),
**caractérisé en ce que**
l'élément de fixation (10) respectif est relié à l'élément de cadre (4) au moyen de deux liaisons par vis (12), l'élément de fixation (4) respectif entourant, à distance, l'élément de support (5) associé.

2. Agencement de réservoir (1) selon la revendication 1,
**caractérisé en ce que**
le réservoir (3) comprend une matière plastique et l'élément de fixation (10) est formé d'un métal.

3. Agencement de réservoir (1) selon la revendication 1 ou la revendication 2,
les éléments de support respectifs (5) sont formés en tant que partie du réservoir (3) et comprennent une matière plastique.

4. Agencement de réservoir (1) selon l'une des revendications précédentes,
**caractérisé en ce que**
les éléments de support (5) respectifs présentent un côté tourné vers l'élément de cadre (4), sur lequel les éléments de support (5) présentent chacun un évidement (11) en forme de C, qui est apte à être amené en engagement avec les éléments de positionnement respectifs (7) lorsque le réservoir (3) est disposé sur l'élément de cadre (4).

5. Élément de cadre (4) pour une motocyclette, avec deux éléments de positionnement (7) disposés sur les deux côtés extérieurs (6) de l'élément de cadre (4), par l'intermédiaire desquels un réservoir (3) de la motocyclette est apte à être supporté dans son état monté au moyen d'éléments (5), respectivement associés, de support du réservoir (3),
un élément de fixation (10) correspondant étant fixé sur le côté extérieur (6) correspondant de l'élément de cadre (4) dans la zone de l'élément de positionnement (7) respectif,
**caractérisé en ce que**
l'élément de fixation (10) respectif est relié à l'élément de cadre (4) au moyen de deux liaisons par vis (12), l'élément de fixation (4) respectif entourant, à distance, l'élément de support (5) associé.

6. Élément de cadre (4) selon la revendication 5, **caractérisé en ce que**
l'élément de fixation (10) est disposé dans une zone proche à côté de l'élément de support (7), qui comprend un élément en caoutchouc en forme d'étoile, sur le côté extérieur (6) de l'élément de cadre (4).

7. Procédé de montage d'un réservoir (3) sur un cadre (2) d'une motocyclette, dans lequel des éléments de support respectifs (5) du réservoir (3) sont supportés sur des éléments de positionnement (7) respectivement associés, disposés sur les deux côtés extérieurs (6) d'un élément de cadre (4),
les éléments de support (5) respectifs par un élément de fixation (10) associé, qui est disposé dans une zone de l'élément de positionnement (7) respectif et est fixé sur le côté extérieur (6) correspondant de l'élément de cadre (4),
**caractérisé en ce que**
l'élément de fixation (10) respectif est relié à l'élément de cadre (4) au moyen de deux liaisons par vis (12), étant passé par, ce qui fait que l'élément de fixation (10) respectif entoure, à distance, l'élément de support (5) respectif.

8. Procédé de montage selon la revendication 7, **caractérisé en ce que**,
lorsque le réservoir (3) est disposé sur l'élément de cadre (4), un évidement en forme de C (11) de l'élément de support respectif (5) est amené en engagement avec un élément en caoutchouc en forme d'étoile de l'élément de support (7) par une mise en place sur l'élément de support associé (7).
